# EUROPÄISCHE PATENTSCHRIFT

(11) **EP 1 130 067 B1**
(45) Veröffentlichungstag und Bekanntmachung des Hinweises auf die Patenterteilung: **02.11.2005**
(21) Anmeldenummer: 01103259.6
(22) Anmeldetag: 12.02.2001
(51) Int. Cl.: C09D 5/03, C09D 7/02

(54) **Verfahren zur Erzeugung von pigmentierten Pulverlacken**
Process for preparing pigmented powder paints
Procédé de préparation de peintures en poudre pigmentées

(30) Priorität: 01.03.2000 DE 10009753; 24.05.2000 DE 10025680
(43) Veröffentlichungstag der Anmeldung: 05.09.2001
(73) Patentinhaber: Clariant GmbH, 65929 Frankfurt am Main (DE)
(72) Erfinder: Schmalzl, Manfred, Dl., 86456 Gablingen/Lü. (DE)

(56) Entgegenhaltungen:
- DE-A- 2 439 079
- US-A- 5 188 765

## Beschreibung

Die vorliegende Erfindung betrifft ein verbessertes Verfahren zur Erzeugung von pigmentierten Pulverlacken unter Verwendung eines Mittels zur Verbesserung der Pigmentdispergierung.

Die Herstellung von Pulverlacken durch Extrusion in gleichläufigen Zweischnecken-Extrudem oder Einschnecken-Knetem ist allgemein bekannt. Pulverlacke setzen sich zusammen aus
- Bindemittel, wie z.B. Polyesterharzen welche vernetzt werden z.B. mit Epoxiden, Triglycidylisocyanurat (TGIC), *β*-Hydroxyalkylamin oder verkappten Isocyanaten (Urethdione)
- Pigmenten und Füllstoffen, sofern es sich nicht um Klarlacke handelt. Die Pigmente müssen entsprechend hohe Thermostabilität aufweisen. Beispiele hierfür sind Phthalocyanine, Chinacridone, Azo-Pigmente, Perylen- und Perinon-Pigmente, Benzimidazolon-Pigmente, Anthrachinon-Pigmente, Isoindolinon- und Isoindolin-Pigmente, Anthanthron-Pigmente, Dioxazin-Pigmente, Chinophthalon-Pigmente, Diketo-pyrrolo-pyrrol-Pigmente
- Additiven, wie z.B. Entgasungsmittel, Mattierungsmittel, Antioxidantien, Tribo-Additive, Verlaufsmittel, Wachse zur Verbesserung der Kratzfestigkeit.

Bei der Herstellung des Pulverlacks werden alle Bestandteile zunächst in einem Mischer vorgemischt, anschließend in einem Extruder oder Kneter bei 80 bis 130°C homogenisiert und schließlich durch Mahlung und Sichtung auf die endgültige Kornfeinheit gebracht. Bei der Herstellung von pigmentierten Systemen kommt es vor allem darauf an, Pigment-Agglomerate möglichst feinteilig zu zerteilen und Pigment-Aggregate möglichst homogen zu verteilen um die optimale Farbstärke zu erhalten. Heute geschieht dies durch die Einbringung von mechanischer Energie über die Schneckenkonfiguration der eingesetzten Extruder oder Kneter ohne Verwendung eines Dispergierhilfsmittels.

Der Erfindung lag die Aufgabe zugrunde, die Pigmentdispergierung in Pulverlacken durch Verwendung eines geeigneten Dispergiermittels zu verbessern. Als Maß für die verbesserte Pigmentdispergierung dient die relative Farbstärke.

Gegenstand der Erfindung ist somit ein Verfahren zur Herstellung von pigmentierten Pulverlacken, dadurch gekennzeichnet, dass den Pulverlacken ein Montansäurederivat als Dispergiermittel zugemischt wird.

Ein weiterer Gegenstand der Erfindung ist die Verwendung von Montansäurederivaten als Dispergiermittel für Pigmente bei der Herstellung von Pulverlacken.

Ein weiterer Gegenstand der Erfindung sind Pulverlacke, welche Pigmente und Montansäurederivate enthalten.

Als Dispergiermittel für Pigmente in Pulverlacken werden Montansäurederivate verwendet. Unter Montansäuren versteht man ein Gemisch von Carbonsäuren mit Kohlenstoffkettenlängen von C₂₂ bis C₃₆, die im allgemeinen einen Tropfpunkt von 75 bis 110°C (gemessen nach DGF-M-III 3 (75)), eine Säurezahl von 10 bis 160 mg KOH/g (gemessen nach DGF-M-IV 2 (57)), eine Verseifungszahl von 60 bis 180 mg KOH/g (gemessen nach DGF-M-IV 2 (57)), und eine Dichte von 0,99 bis 1,03 g/cm³ aufweisen.

Als Derivate der Montansäuren kommen vorzugsweise deren Ester, Amide und Salze in Frage.

In einer bevorzugten Ausführungsform der Erfindung ist das Montansäurederivat ein Ester der Montansäure mit einem Alkohol, welcher 1 bis 4 OH-Gruppen und 2 bis 20 Kohlenstoffatome aufweist. Handelt es sich um ein Polyol mit 2 bis 4 OH-Gruppen, so ist eine Zahl von 2 bis 8 Kohlenstoffatomen besonders bevorzugt. Insbesondere handelt es sich bei den Polyolen um Glycerin, Ethylenglykol oder 1,3-Butandiol. Handelt es sich um einen Monoalkohol, so ist eine Zahl von 8 bis 14 Kohlenstoffatomen besonders bevorzugt.

In einer weiteren bevorzugten Ausführungsform der Erfindung ist das Montansäurederivat ein Amid der Montansäure mit einem Mono- oder Diamin, welches 2 bis 18, insbesondere 2 bis 8 Kohlenstoffatome aufweist. Ein besonders bevorzugtes Diamin ist Ethylendiamin.

In einer weiteren bevorzugten Ausführungsform der Erfindung ist das Montansäurederivat ein Salz der Montansäure mit einem Alkali- oder Erdalkalimetall.

Die Derivate der Montansäuren werden im allgemeinen durch oxidative Bleichung von Rohmontanwachs, Umsetzung des daraus erhaltenen Säurewachses mit einem Alkohol, Amid und/oder Verseifung mit einem Alkali- oder Erdalkalihydroxid hergestellt. Wachse dieses Typs sind seit vielen Jahren kommerziell verfügbar. Beispiele hierfür sind ®Licowax S (Säurewachs), Licowax E (Esterwachs), Licowax OP (teilverseiftes Esterwachs). Als Einsatzform wird Pulver oder Mikropulver mit einer Teilchengröße kleiner 500 µm bevorzugt. Die Teilchengröße wird mittels Siebanalyse oder mit einem Laserbeugungsgerät, z.B. der Firma Malvern, bestimmt. Die Einsatzmenge beträgt in der Regel 0,1 bis 10, vorzugsweise 0,5 bis 5,0 Gewichtsteile bezogen auf die Gesamtformulierung.

Andere Wachse, wie zum Beispiel polare oder unpolare Kohlenwasserstoffwachse oder Pflanzenwachse, wie z.B. Carnauba-Wachs, haben einen geringeren Einfluss auf die Pigmentdispergierung. Sie können als Co-Dispergatoren verwendet werden.

### Beispiele

Pulverlacke, bestehend aus
70,0 Teilen Bindemittel
9,0 Teilen Blanc Fixe N
20,0 Teilen Titandioxid Kronos 2310
1,0 Teilen ®Hostaperm Rotviolett ER 02
0,5 Teilen ®Ceridust 5551

70,0 Teilen Bindemittel
9,0 Teilen Blanc Fixe N
20,0 Teilen Titandioxid Kronos 2310
1,0 Teilen Hostaperm Rotviolett ER 02
1,0 Teilen Ceridust 5551

70,0 Teilen Bindemittel
9,0 Teilen Blanc Fixe N
20,0 Teilen Titandioxid Kronos 2310
1,0 Teilen Hostaperm Rotviolett ER 02
2,0 Teilen Ceridust 5551

70,0 Teilen Bindemittel
9,0 Teilen Blanc Fixe N
20,0 Teilen Titandioxid Kronos 2310
1,0 Teilen ®Hostaperm Blau A4R
0,5 Teilen Ceridust 5551

70,0 Teilen Bindemittel
9,0 Teilen Blanc Fixe N
20,0 Teilen Titandioxid Kronos 2310
1,0 Teilen Hostaperm Blau A4R
1,0 Teilen Ceridust 5551

70,0 Teilen Bindemittel
9,0 Teilen Blanc Fixe N
20,0 Teilen Titandioxid Kronos 2310
1,0 Teilen Hostaperm Blau A4R
2,0 Teilen Ceridust 5551

Blanc Fixe N = Bariumsulfat
Ceridust 5551 = Montanesterwachs
wurden mittels der Verfahrensschritte
- Vormischen der Komponenten in einem Mixaco Mischer
- Extrudieren in einem APV Baker Zweischnecken-Laborextruder bei 110°C
- Zerkleinern in einer Retsch Stiftmühle
- Absieben auf eine Kornfeinheit von kleiner 125 µm
hergestellt. Das Bindemittel setzt sich zusammen aus:
90,13 % ®Alftalat AN 989 (Polyesterharz, Vianova Resins)
4,74 % ®Primid XL 552 (*β*-Hydroxyalkylamin, EMS Chemie)
4,37 % ®Additol XL 9824 (Verlaufmittel, Vianova Resins)
0,29 % Benzoin
0,47 % ®Hostanox M 101 (Antioxidans, Clariant GmbH)

Kenndaten von Ceridust 5551:
Tropfpunkt: 100°C
Säurezahl: 15 mg KOH/g
Dichte (bei 20°C): 1,00 g/cm³
Durchschnittliche Teilchengröße: 9 µm

Das Pulver wurde mittels einer elektrostatischen Sprüheinrichtung der Firma Wagner auf Metallsubstrate appliziert und bei 180°C 10 Minuten eingebrannt. Die Farbstärke der Beschichtung wurde nach DIN 55986 auf einem Spektrophotometer CM 3600d der Firma Minolta gemessen. Zur Berechnung der relativen Farbstärke wurde der Messwert auf den Messwert der Nullprobe (ohne Dispergiermittel; Nullprobe = 100 %) bezogen. Werte größer 100 bedeuten höhere Farbstärke, kleiner 100 geringere Farbstärke als die Nullprobe.

| Dispergiermittel auf Basis Montansäuren | Hostaperm Rotviolett ER 02 | Hostaperm Blau A4R |
|---|---|---|
| Gewichtsteile | Rel. Farbstärke % | Rel. Farbstärke % |
| 0 | 100 | 100 |
| 0,5 | 108 | 114 |
| 1,0 | 120 | 123 |
| 2,0 | 127 | 132 |

Es konnte gezeigt werden, dass sich durch Zusatz von Montansäurederivaten als Dispergiermittel die Dispergierung von Pigmenten verbessern und damit die Farbstärke erhöhen lässt.

## Patentansprüche

1. Verfahren zur Herstellung von pigmentierten Pulverlacken, **dadurch gekennzeichnet, dass** den Pulverlacken ein Montansäurederivat als Dispergiermittel zugemischt wird.

2. Verfahren gemäß Anspruch 1, worin als Montansäurederivat ein Ester, Amid oder Salz der Montansäure verwendet wird.

3. Verwendung von Montansäurederivaten als Dispergiermittel für Pigmente bei der Herstellung von Pulverlacken.

4. Pulverlacke, welche Bindemittel, Pigmente, Additive und Montansäurederivate enthalten.

## Claims

1. A process for preparing pigmented powder coating materials, which comprises admixing to the powder coating materials a montanic acid derivative as dispersant.

2. The process as claimed in claim 1, wherein said montanic acid derivative comprises an ester, amide or salt of montanic acid.

3. The use of montanic acid derivatives as dispersants for pigments for the preparation of powder coating materials.

4. A powder coating material comprising binders, pigments, additives, and montanic acid derivatives.

## Revendications

1. Procédé de préparation de peintures en poudre pigmentées, **caractérisé en ce qu'**on mélange aux peintures en poudre un dérivé de l'acide montanique en tant que dispersant.

2. Procédé selon la revendication 1, dans lequel on utilise en tant que dérivé de l'acide montanique un ester, un amide ou un sel de l'acide montanique.

3. Utilisation des dérivés d'acide montanique en tant que dispersant pour des pigments lors de la préparation de peintures en poudre.

4. Peintures en poudre qui contiennent des liants, des pigments, des additifs et des dérivés de l'acide montanique.
